# FASCICULE DE BREVET EUROPEEN

(11) **EP 3 839 331 B1**
(45) Date de publication et mention de la délivrance du brevet: **19.04.2023**
(21) Numéro de dépôt: 20214784.9
(22) Date de dépôt: 16.12.2020
(51) Int. Cl.: F21S 45/47, F21S 43/14, F21S 43/19, F21S 43/20, B60Q 1/26, F21W 103/20, F21W 103/55

(54) **MODULE LUMINEUX D'UN VÉHICULE AUTOMOBILE COMPORTANT DEUX SOURCES LUMINEUSES**
KRAFTFAHRZEUGLEUCHTMODUL MIT ZWEI LICHTQUELLEN
LIGHT MODULE FOR A MOTOR VEHICLE COMPRISING TWO LIGHT SOURCES

(30) Priorité: 20.12.2019 FR 1915238
(43) Date de publication de la demande: 23.06.2021
(73) Titulaire: Valeo Vision, 93012 Bobigny Cedex (FR)
(72) Inventeur: FERNANDEZ CHAICHIO, Ricardo, 23600 MARTOS (ES); RODRIGUEZ NAVARRO, Leandro, 23600 MARTOS (ES)
(74) Mandataire: Valeo Visibility

(56) Documents cités:
- EP-A1- 3 190 334
- WO-A1-2011/078217
- DE-A1-102013 108 337
- FR-A1- 3 056 702
- IT-A1- UA20 164 029
- US-A1- 2014 218 954

## Description

L'invention concerne le domaine de l'éclairage et de la signalisation lumineuse des véhicules automobiles. Plus précisément, l'invention concerne un module lumineux de véhicule automobile comportant au moins deux sources lumineuses.

Dans le domaine de l'éclairage et de la signalisation des véhicules automobiles, il existe des fonctions lumineuses dites mutuellement incorporées, qui sont émises via une même surface de sortie d'un module lumineux. C'est par exemple le cas des fonctions d'indicateur de direction et de feu diurne, qui peuvent être mutuellement incorporées.

Le document EP 2 161 494 décrit par exemple un module lumineux dans lequel une première source lumineuse, associée à une fonction de feu diurne, et une deuxième source lumineuse, associée à une fonction d'indicateur de direction, sont montées sur une même carte de circuit imprimé, en vis-à-vis de la surface d'entrée d'un unique guide de lumière de sorte que les fonctions de feu diurne et d'indicateur de direction soit émises depuis une même surface de sortie de ce guide de lumière.

En alternative, il est possible de monter chaque source lumineuse associée à l'une des fonctions sur une carte de circuit imprimé qui lui est propre. Toutefois, cette solution impose de multiplier les faisceaux de connexion pour la fourniture d'une alimentation électrique à chacune des sources lumineuses et les connecteurs sur les cartes de circuit imprimé pour recevoir ces alimentations. Cette solution accroit donc le coût du module lumineux et complexifie son assemblage. Le document IT UA20 164 029 montre un dispositif d'illumination pour véhicules dont les bords des deux cartes de circuit imprimé ne s'étendent pas l'un contre l'autre.

Il existe ainsi un besoin d'une solution alternative aux solutions connues, notamment illustrées par les documents cités, et qui soit simple et peu coûteuse.

L'invention vise à réponse à ce besoin.

A ces fins, l'invention concerne un module lumineux d'un véhicule automobile, comportant une première source lumineuse associée à au moins une première fonction lumineuse prédéterminée et une deuxième source lumineuse associée à au moins une deuxième fonction lumineuse prédéterminée, dans lequel la première source lumineuse est montée sur une première carte de circuit imprimé et la deuxième source lumineuse est montée sur une deuxième carte de circuit imprimé distincte de la première carte de circuit imprimé, caractérisée en ce qu'il comporte un connecteur agencé pour recevoir une alimentation électrique destinée à l'alimentation électrique des première et/ou deuxième sources lumineuses pour la réalisation des première et/ou deuxième fonctions lumineuses prédéterminées, le connecteur étant monté sur la première carte de circuit imprimé et la première carte de circuit imprimé étant reliée électriquement à la deuxième carte de circuit imprimé par un élément conducteur soudé à chacune des première et deuxième cartes de circuit imprimé.

L'invention propose ainsi une alternative aux solutions connues, en ce que la première source lumineuse et la deuxième source lumineuse sont montées sur des cartes de circuit imprimé distinctes dont les bord respectifs s'étendent l'un contre l'autre. En outre, selon l'invention, un seul connecteur est employé pour recevoir une alimentation électrique pour les deux sources lumineuses, cette alimentation électrique étant transmise à la deuxième source lumineuse depuis la première carte de circuit imprimé via l'élément conducteur.

On entend par « source lumineuse associée à une fonction lumineuse prédéterminée » le fait que la fonction lumineuse prédéterminée est réalisée à partir de la lumière émise par la source lumineuse lorsqu'elle est alimentée par une alimentation électrique, seule ou en combinaison avec de la lumière émise par une autre source lumineuse, directement ou après déviation par un dispositif optique.

Avantageusement, la première carte de circuit imprimé et la deuxième carte de circuit imprimé sont agencées de sorte que ladite alimentation électrique reçue par ledit connecteur puisse être transmise à la deuxième source lumineuse, via l'élément conducteur. Le cas échéant, la deuxième carte de circuit imprimé est dépourvue de connecteur pour la réception d'une alimentation électrique. Si on le souhaite, le module lumineux peut comporter un circuit de pilotage pour contrôler l'alimentation électrique fournie aux première et deuxième sources lumineuses à partir de l'alimentation électrique reçue par le connecteur, le circuit de pilotage étant par exemple monté sur la première carte de circuit imprimé. Eventuellement, la première carte de circuit imprimé peut être une carte de circuit imprimé de type FR4 (de l'anglais Flame Resis-tant 4) et la deuxième carte de circuit imprimé peut être une carte de circuit imprimé de type SMI ou à Substrat Métallique Isolé.

Avantageusement, les première et deuxième cartes de circuit imprimé sont montées sur un support commun. Par exemple, le support commun peut être un dissipateur de chaleur métallique ou en variante un support plastique.

Selon l'invention, les première et deuxième cartes de circuit imprimé sont agencées de sorte qu'un premier bord de la première carte de circuit imprimé s'étende sensiblement contre un deuxième bord de la deuxième carte de circuit imprimé. Le cas échéant, le premier bord peut être en contact avec le deuxième bord ou en variante distant du deuxième bord. De préférence, les première et deuxième cartes de circuit imprimé sont coplanaires.

Avantageusement, la première source lumineuse est montée sur la première carte de circuit imprimé sensiblement au niveau du premier bord et dans lequel la deuxième source lumineuse est montée sur la deuxième carte de circuit imprimé sensiblement au niveau du deuxième bord et au niveau de la première source lumineuse.

Le cas échéant, le module lumineux peut comporter un élément optique présentant une face d'entrée de lumière commune agencée en vis-à-vis des première et deuxième sources lumineuses pour recevoir de la lumière émise par ces sources et une face de sortie de lumière commune pour la réalisation desdites première et deuxième fonctions lumineuses prédéterminées à partir de la lumière émise par les première et deuxième sources lumineuses. Par exemple, l'élément optique pourra être un guide de lumière présentant une face d'entrée de couplage, une face de découplage et une face de sortie, la face d'entrée étant agencée pour coupler la lumière émise par la première et/ou la deuxième source lumineuse dans le guide de lumière de sorte que cette lumière se propage dans le guide de lumière par réflexion interne totale sur une paroi interne du guide de lumière jusqu'à rencontrer la face de découplage, laquelle est agencée pour découpler cette lumière vers la face de sortie au travers de laquelle elle est émise vers l'extérieur du module lumineux. En variante, l'élément optique pourra présenter deux faces d'entrée de lumière chacune dédiée à l'une des première et deuxième sources lumineuses et une face de sortie de lumière commune.

Avantageusement, l'élément conducteur est un ruban métallique. Le cas échéant, la première carte de circuit imprimé pourra comporter une borne de connexion à laquelle est soudée une extrémité dudit ruban métallique et la deuxième carte de circuit imprimé pourra comporter une borne de connexion à laquelle est soudée l'autre extrémité dudit ruban métallique. En variante, l'élément conducteur pourra être un fil métallique ou encore un pont de soudure. Si on le souhaite, la première carte de circuit imprimé peut être reliée électriquement à la deuxième carte de circuit imprimé par une pluralité d'éléments conducteurs chacun soudé de part et d'autre aux première et deuxième cartes de circuit imprimé.

Dans un exemple de réalisation de l'invention, la première source lumineuse comporte au moins une puce à semi-conducteur émettrice de lumière de couleur ambre, la deuxième fonction lumineuse étant une fonction de type indicateur de direction réglementaire. Si on le souhaite, la première source lumineuse comporte une pluralité de puces à semi-conducteur émettrices de lumière de couleur ambre, destinées à participer ensemble à la réalisation de ladite fonction de type indicateur de direction réglementaire. On entend par indicateur de direction réglementaire par exemple une fonction lumineuse de type indicateur de direction respectant les prescriptions réglementaires d'un pays ou d'une région donnée, et par exemple la réglementation européenne ECE R48.

Le cas échéant, la deuxième source lumineuse peut comporter au moins une puce à semi-conducteur émettrice de lumière de couleur blanche, la première fonction lumineuse étant une fonction de type feu diurne réglementaire. Si on le souhaite, la deuxième source lumineuse comporte une pluralité de puces à semi-conducteur émettrices de lumière de couleur blanche, destinées à participer ensemble à la réalisation de ladite fonction de type feu diurne réglementaire. On entend par feu de jour réglementaire par exemple une fonction lumineuse de type feu diurne respectant les prescriptions réglementaires d'un pays ou d'une région donnée, et par exemple la réglementation européenne ECE 87.

Avantageusement, le module lumineux peut comporter une unité de contrôle agencée pour contrôler sélectivement l'émission de lumière par la première source lumineuse ou par la deuxième source lumineuse. Si on le souhaite, ladite unité de contrôle peut être montée sur la première carte de circuit imprimé. De préférence, l'unité de contrôle peut être agencée pour contrôler l'alimentation électrique fournie à l'une ou l'autre des première et deuxième sources lumineuses de sorte que cette source lumineuse émette une lumière d'intensité lumineuse réduite pour participer à la réalisation d'une troisième fonction lumineuse prédéterminée, par exemple un feu de position réglementaire.

L'invention a également pour objet un dispositif d'éclairage avant d'un véhicule automobile, caractérisé en ce qu'il comporte un module lumineux selon l'invention.

La présente invention est maintenant décrite à l'aide d'exemples uniquement illustratifs et nullement limitatifs de la portée de l'invention, et à partir des illustrations jointes, dans lesquelles :
[Fig. 1] représente, schématique et partiellement, une vue de dessus d'un module lumineux selon un mode de réalisation de l'invention ;
[Fig. 2] représente une coupe par un premier plan du module lumineux de la [Fig. 1] ; et
[Fig. 3] représente une coupe par un deuxième plan du module lumineux de la [Fig. 1].

Dans la description qui suit, les éléments identiques, par structure ou par fonction, apparaissant sur différentes figures conservent, sauf précision contraire, les mêmes références.

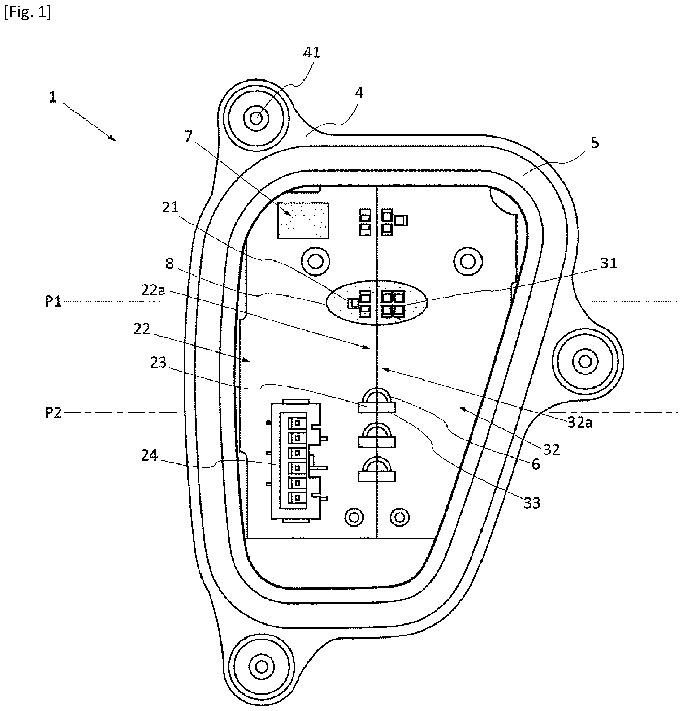

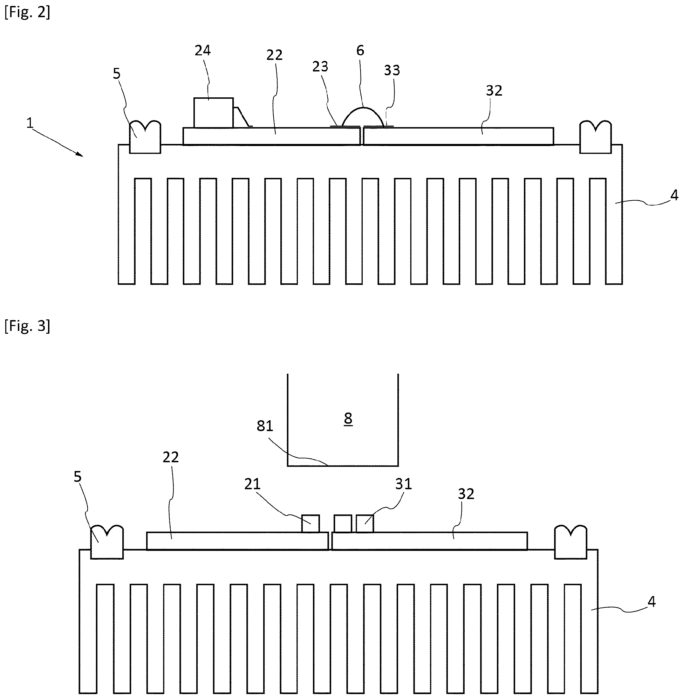

On a représenté en [Fig. 1] une vue de dessus d'un module lumineux 1 selon un mode de réalisation de l'invention ; et en [Fig. 2] et en [Fig. 3] des vues en coupe par des plans respectivement P1 et P2 du module lumineux 1.

Le module lumineux 1 comporte une première source lumineuse 21 comprenant une pluralité de puces à semi-conducteur émettrices de lumière de couleur ambre et une deuxième source lumineuse 31 comprenant une pluralité de puces à semi-conducteur émettrices de lumière de couleur blanche.

La première source lumineuse 21 est destinée à participer à la réalisation d'une première fonction lumineuse de type indicateur de direction réglementaire, qui lui est associée. La deuxième source lumineuse 31 est destinée à participer à la réalisation d'une deuxième fonction lumineuse de type feu diurne réglementaire et à la réalisation d'une troisième fonction lumineuse de type feu de position réglementaire, qui lui sont associées.

La première source lumineuse 21 est montée sur une première carte de circuit imprimé 22 de type FR4 et la deuxième source lumineuse 31 est montée sur une deuxième carte de circuit imprimé 32 de type SMI, distincte de la première carte 22.

Les première et deuxième cartes de circuit imprimé 22 et 32 sont montées ensemble sur un même dissipateur de chaleur métallique 4, lequel est pourvu d'interfaces de montage 41 et d'un joint d'étanchéité 5 s'étendant sur tout le pourtour du dissipateur de chaleur 4. De la sorte, le module lumineux 1 peut être monté sur une paroi d'un boîtier d'un dispositif d'éclairage avant de véhicule automobile pourvue de moyens de montage complémentaires aux interfaces de montage 41.

Les première et deuxième cartes de circuit imprimé 22 et 32 sont montées sur le dissipateur de chaleur métallique 4 de façon à être coplanaires et de sorte qu'un premier bord 22a de la première carte 22 s'étende sensiblement contre un deuxième bord 32a de la deuxième carte 32, avec un jeu. On notera que la première source lumineuse 21 est montée sur la première carte de circuit imprimé 22 sensiblement au niveau du premier bord 22a et que la deuxième source lumineuse 31 est montée sur la deuxième carte de circuit imprimée 32 sensiblement au niveau du deuxième bord 32a, en vis-à-vis de la première source lumineuse 21.

Afin d'assurer l'alimentation électrique des première et deuxième sources lumineuses 21 et 22, les première et deuxième cartes de circuit imprimé 31 et 32 sont reliées électriquement l'une à l'autre au moyen d'une pluralité de rubans métalliques 6, une extrémité de chaque ruban 6 étant soudée à une borne de connexion 23 de la première carte de circuit imprimé 21 et l'autre extrémité de ce ruban 6 étant soudée à une borne de connexion 33 de la deuxième carte de circuit imprimé 31. Par ailleurs, le module lumineux 1 comporte un connecteur 24, monté sur la première carte de circuit imprimé 21 et agencé pour recevoir une alimentation électrique depuis une source d'alimentation externe au module lumineux 1, comme par exemple la batterie d'un véhicule automobile.

Les première et deuxième cartes de circuit imprimé 31 et 32 comportent un ensemble de pistes et de composants électroniques permettant de transmettre cette alimentation électrique reçue sur le connecteur 24 vers l'une et/ou l'autre des sources lumineuses 21 et 22, notamment via le ruban métallique 6 en ce qui concerne la deuxième source lumineuse 22.

Plus spécifiquement, le module lumineux 1 comporte une unité 7 de contrôle et de pilotage de ladite alimentation électrique. Cette unité 7 est agencée pour, en fonction d'instructions qu'elle reçoit commandant l'émission d'une ou plusieurs fonctions lumineuses données, convertir ladite alimentation électrique en une alimentation adaptée à l'une ou à chacune des sources lumineuses 21 et 22 et pour commuter cette alimentation électrique convertie vers l'une et/ou l'autre des sources lumineuses 21 et 22, de sorte que lorsque cette ou ces sources sont alimentées par ladite alimentation électrique convertie, elle ou elles émettent de la lumière permettant de réaliser la ou l'une des fonctions lumineuses qui lui ou leur sont associées et dont l'émission est requise.

Dans l'exemple décrit, l'unité 7 est montée sur la première carte de circuit imprimé 31.

Le module lumineux 1 comporte un guide de lumière 8 présentant une face d'entrée de couplage 81 agencée pour coupler la lumière émise par la première et/ou la deuxième source lumineuse 21 et 22 dans le guide de lumière 8 de sorte que cette lumière se propage dans le guide de lumière par réflexion interne totale sur une paroi interne du guide de lumière. Le guide de lumière 8 comporte en outre une face de découplage et une face de sortie de lumière (non représentées), lesquelles sont agencées de sorte que de la lumière se propageant dans le guide de lumière 8 et rencontrant la face de découplage, soit découplée vers la face de sortie au travers de laquelle elle est émise vers l'extérieur du module lumineux pour former la ou l'une des fonctions lumineuses associées à la source lumineuse ayant émis cette lumière. On comprend ainsi que la face de sortie forme une face de sortie commune pour la réalisation des fonctions lumineuses associées aux première et deuxième sources lumineuses 21 et 22.

La description qui précède explique clairement comment l'invention permet d'atteindre les objectifs qu'elle s'est fixée, et notamment en proposant un module lumineux comprenant deux sources lumineuses, chacune montée sur une carte de circuit imprimé qui lui est propre, les bords des deux cartes de circuit imprimé s'étendant sensiblement l'un contre l'autre, et dans lequel seule l'une des cartes de circuit imprimé comporte un connecteur pour recevoir une alimentation électrique et dans lequel les deux cartes de circuit imprimé sont reliées électriquement par un élément conducteur pour transmettre cette alimentation électrique depuis l'une des cartes vers l'autre. On comprend ainsi que l'utilisation de deux cartes de circuit imprimé dont les bords s'étendent sensiblement l'un contre l'autre permet d'offrir une alternative aux solutions antérieures connues qui proposent de monter les deux sources lumineuses sur une même carte, et que l'utilisation d'un connecteur sur une seule des cartes de circuit imprimé permet de réduire le coût et de simplifier l'assemblage du module lumineux.

En tout état de cause, l'invention ne saurait se limiter aux modes de réalisation spécifiquement décrits dans ce document. En particulier, on pourra prévoir d'autres types d'éléments conducteurs que celui décrit, et notamment des éléments conducteurs de type fil métallique ou de type pont de soudure. On pourra également envisager d'autres types d'élément optique que celui décrit, et notamment un élément optique de type collimateur, de type lentille ou encore de type réflecteur.

## Revendications

1. Module lumineux (1) d'un véhicule automobile, comportant une première source lumineuse (21) associée à au moins une première fonction lumineuse prédéterminée et une deuxième source lumineuse (31) associée à au moins une deuxième fonction lumineuse prédéterminée, dans lequel la première source lumineuse est montée sur une première carte de circuit imprimé (22) et la deuxième source lumineuse est montée sur une deuxième carte de circuit imprimé (32) distincte de la première carte de circuit imprimé, le module lumineux comportant un connecteur (24) agencé pour recevoir une alimentation électrique destinée à l'alimentation électrique des première et/ou deuxième sources lumineuses pour la réalisation des première et/ou deuxième fonctions lumineuses prédéterminées, le connecteur étant monté sur la première carte de circuit imprimé et la première carte de circuit imprimé étant reliée électriquement à la deuxième carte de circuit imprimé par un élément conducteur (6) soudé à chacune des première et deuxième cartes de circuit imprimé,
**caractérisé en ce que** les première (22) et deuxième (32) cartes de circuit imprimé sont agencées de sorte qu'un premier bord (22a) de la première carte de circuit imprimé s'étende sensiblement contre un deuxième bord (32a) de la deuxième carte de circuit imprimé.

2. Module (1) selon la revendication précédente, dans lequel les première (22) et deuxième (32) cartes de circuit imprimé sont montées sur un support commun (4).

3. Module (1) selon la revendication précédente, dans lequel la première source lumineuse (21) est montée sur la première carte de circuit imprimé (22) sensiblement au niveau du premier bord (22a) et dans lequel la deuxième source lumineuse (31) est montée sur la deuxième carte de circuit imprimé (32) sensiblement au niveau du deuxième bord (32a) et au niveau de la première source lumineuse.

4. Module (1) selon la revendication précédente, **caractérisé en ce qu'**il comporte un élément optique (8) présentant une face d'entrée (81) de lumière commune agencée en vis-à-vis des première (21) et deuxième (31) sources lumineuses pour recevoir de la lumière émise par ces sources et une face de sortie de lumière commune pour la réalisation desdites première et deuxième fonctions lumineuses prédéterminées à partir de la lumière émise par les première et deuxième sources lumineuses.

5. Module (1) selon l'une des revendications précédentes, dans lequel l'élément conducteur (6) est un ruban métallique.

6. Module (1) selon l'une des revendications précédentes, dans lequel la première source lumineuse (21) comporte au moins une puce à semi-conducteur émettrice de lumière de couleur ambre, la première fonction lumineuse étant une fonction de type indicateur de direction réglementaire.

7. Module (1) selon l'une des revendications précédentes, dans lequel la deuxième source lumineuse (31) comporte au moins une puce à semi-conducteur émettrice de lumière de couleur blanche, la deuxième fonction lumineuse étant une fonction de feu diurne réglementaire.

8. Module (1) selon l'une des revendications précédentes, **caractérisé en ce qu'**il comporte une unité de contrôle (7) agencée pour contrôler sélectivement l'émission de lumière par la première source lumineuse (21) ou par la deuxième source lumineuse (31).

9. Dispositif d'éclairage avant d'un véhicule automobile, **caractérisé en ce qu'**il comporte un module lumineux (1) selon l'une des revendications 1 à 8.

## Patentansprüche

1. Leuchtmodul (1) eines Kraftfahrzeugs, aufweisend eine erste Lichtquelle (21), die wenigstens einer ersten vorbestimmten Leuchtfunktion zugeordnet ist, und eine zweite Lichtquelle (31), die wenigstens einer zweiten vorbestimmten Leuchtfunktion zugeordnet ist, wobei die erste Lichtquelle auf einer ersten Leiterplatte (22) angebracht ist und die zweite Lichtquelle auf einer zweiten Leiterplatte (32), die von der ersten Leiterplatte gesondert ist, angebracht ist, wobei das Leuchtmodul einen Konnektor (24) aufweist, der dafür angeordnet ist, eine Stromversorgung aufzunehmen, die zur Stromversorgung der ersten und/oder zweiten Lichtquelle für die Erfüllung der ersten und/oder zweiten vorbestimmten Leuchtfunktion bestimmt ist, wobei der Konnektor auf der ersten Leiterplatte angebracht ist und die erste Leiterplatte durch ein Leiterelement (6), das an jede der ersten und zweiten Leiterplatte gelötet ist, elektrisch mit der zweiten Leiterplatte verbunden ist, **dadurch gekennzeichnet, dass** die erste (22) und zweite (32) Leiterplatte so angeordnet sind, dass sich ein erster Rand (22a) der ersten Leiterplatte im Wesentlichen an einen zweiten Rand (32a) der zweiten Leiterplatte erstreckt.

2. Modul (1) nach dem vorhergehenden Anspruch, wobei die erste (22) und zweite (32) Leiterplatte auf einem gemeinsamen Träger (4) angebracht sind.

3. Modul (1) nach dem vorhergehenden Anspruch, wobei die erste Lichtquelle (21) auf der ersten Leiterplatte (22) im Wesentlichen am ersten Rand (22a) angebracht ist und wobei die zweite Lichtquelle (31) auf der zweiten Leiterplatte (32) im Wesentlichen am zweiten Rand (32a) und an der ersten Lichtquelle angebracht ist.

4. Modul (1) nach dem vorhergehenden Anspruch, **dadurch gekennzeichnet, dass** es ein optisches Element (8) aufweist, das eine gemeinsame Lichteintrittsfläche (81), die gegenüber der ersten (21) und zweiten (31) Lichtquelle angeordnet ist, um Licht zu empfangen, das von diesen Quellen ausgesendet wird, und eine gemeinsame Lichtsaustrittsfläche zur Erfüllung der ersten und zweiten vorbestimmten Leuchtfunktion anhand des Lichts, das von der ersten und zweiten Lichtquelle ausgesendet wird, aufweist.

5. Modul (1) nach einem der vorhergehenden Ansprüche, wobei das Leiterelement (6) ein Metallband ist.

6. Modul (1) nach einem der vorhergehenden Ansprüche, wobei die erste Lichtquelle (21) wenigstens einen Halbleiterchip aufweist, der gelbes Licht aussendet, wobei die erste Leuchtfunktion eine Funktion vom Typ eines vorgeschriebenen Richtungsanzeigers ist.

7. Modul (1) nach einem der vorhergehenden Ansprüche, wobei die zweite Lichtquelle (31) wenigstens einen Halbleiterchip aufweist, der weißes Licht aussendet, wobei die zweite Leuchtfunktion eine Funktion eines vorgeschriebenen Tagfahrlichts ist.

8. Modul (1) nach einem der vorhergehenden Ansprüche, **dadurch gekennzeichnet, dass** es eine Steuereinheit (7) aufweist, die dafür angeordnet ist, die Lichtaussendung durch die erste Lichtquelle (21) oder durch die zweite Lichtquelle (31) selektiv zu steuern.

9. Frontbeleuchtungsvorrichtung eines Kraftfahrzeugs, **dadurch gekennzeichnet, dass** sie ein Leuchtmodul (1) nach einem der Ansprüche 1 bis 8 aufweist.

## Claims

1. Light module (1) of a motor vehicle, comprising a first light source (21) associated with at least one first predetermined light function and a second light source (31) associated with at least one second predetermined light function, wherein the first light source is mounted on a first printed circuit board (22) and the second light source is mounted on a second printed circuit board (32) which is distinct from the first printed circuit board, the light module comprising a connector (24) arranged to receive an electric power supply intended to supply electric power to the first and/or second light sources in order to perform the first and/or second predetermined light functions, the connector being mounted on the first printed circuit board and the first printed circuit board being electrically connected to the second printed circuit board by a conductive element (6) soldered to both the first and second printed circuit boards,
**characterized in that** the first (22) and second (32) printed circuit boards are arranged so that a first edge (22a) of the first printed circuit board extends substantially against a second edge (32a) of the second printed circuit board.

2. Module (1) according to the preceding claim, wherein the first (22) and second (32) printed circuit boards are mounted on a common substrate (4).

3. Module (1) according to the preceding claim, wherein the first light source (21) is mounted on the first printed circuit board (22) substantially by the first edge (22a) and wherein the second light source (31) is mounted on the second printed circuit board (32) substantially by the second edge (32a) and by the first light source.

4. Module (1) according to the preceding claim, **characterized in that** it comprises an optical element (8) having a common light entry face (81) arranged opposite the first (21) and second (31) light sources in order to receive light emitted by these light sources and a common light exit face for performing said first and second predetermined light functions on the basis of the light emitted by the first and second light sources.

5. Module (1) according to one of the preceding claims, wherein the conductive element (6) is a metal strip.

6. Module (1) according to one of the preceding claims, wherein the first light source (21) comprises at least one semiconductor chip emitting amber light, the first light function being a regulation turn indicator function.

7. Module (1) according to one of the preceding claims, wherein the second light source (31) comprises at least one semiconductor chip emitting white light, the second light function being a regulation daytime running light function.

8. Module (1) according to one of the preceding claims, **characterized in that** it comprises a control unit (7) arranged to selectively control the emission of light by the first light source (21) or by the second light source (31) .

9. Front lighting device of a motor vehicle, **characterized in that** it comprises a light module (1) according to one of Claims 1 to 8.
